# EUROPEAN PATENT APPLICATION

(11) **EP 4 595 759 A1**
(43) Date of publication of application: **06.08.2025**
(21) Application number: 25153909.4
(22) Date of filing: 24.01.2025
(51) Int. Cl.: A22C 21/00

(54) **DEVICE AND METHOD FOR PROCESSING POULTRY PARTS HAVING AT LEAST ONE BONE**

(30) Priority: 26.01.2024 NL 2036903
(71) Applicant: IFEC B.V., 3261 LK Oud-Beijerland (NL)
(72) Inventor: HAZENBROEK, Jacobus Eliza, 3261 LK Oud-Beijerland (NL); HAZENBROEK, David Scott, 3261 LK Oud-Beijerland (NL); SLAGBOOM, Rijk, 3261 LK Oud-Beijerland (NL)
(74) Representative: Patentwerk B.V.

(57) **Abstract**

The present invention is related to a device for processing poultry parts containing at least one bone, preferably leg parts or drumsticks, comprising a conveyor, for transporting poultry parts, in particular drumsticks, along a transport path, including poultry-carriers for carrying poultry parts, and a cutting section arranged along the transport path of the conveyor. The invention is further related to a method for processing such a poultry part.

## Description

The present invention relates to a device for mechanically processing poultry parts having at least one bone, preferably leg parts or a drumstick. The present invention is further related to a method for processing poultry parts having at least one bone.

Over the past few decades, numerous machines have been developed to meet the global demand for large-scale efficient poultry slaughtering and processing. These machines aim to enhance various aspects of poultry processing, amongst others focusing on the breakdown of poultry carcasses in smaller parts. An actual trend in the market is a demand for easier to prepare (ready-to-cook) and consume poultry parts. By the preparation of which parts also a higher value may be added by the producers of these parts. The existing poultry processing equipment is varied and comprises - among many others - primary poultry processing equipment, like for instance eviscerators, vent cutters and fat removers, and secondary poultry processing equipment, like for instance debones and various cutters for cutting legs, necks, wings and breasts. There is also various equipment available for the further processing of separated poultry parts. Some examples of such equipment used in the later stages of the poultry processing are portion cutters, flatteners, coaters, mincers and marinaters.

Although the present available equipment offers a variety of processing options there is still a demand for further specialisation in the poultry preparation for consumption.

It is an objective of the invention to provide a device for efficiently mechanically processing poultry parts to an enhanced level of attractiveness in cooking and consumption.

The present invention provides a device for processing poultry parts having or containing at least one bone, preferably leg parts or drumsticks, comprising: at least one conveyor, for transporting poultry parts, in particular drumsticks or drumettes, along a transport path, optionally including a poultry-carrier, or multiple poultry-carriers for carrying poultry parts, a cutting section arranged along the transport path of the conveyor, comprising at least one cutting element for making an incision in a part of the meat of a poultry part transported along the transport path, in particular along the cutting section, wherein said incision preferably extends along a part of a bone, such as the tibia of the leg of drumstick or the homerus of the wing, a meat spreading section, arranged along the transport path of the conveyor downstream of the cutting section comprising at least one spreader, for spreading the meat adjacent to the incision, at least along one side of said incision. As far as individual technical features are addressed in the context of the present invention also embodiments with plural of such features are part of the claimed scope of the invention, so for example if reference is made to a device including "a conveyor" also a device including two or more conveyors are included as such embodiment. The device according to the present invention enables to "open" a bone containing poultry part, in particular a drumstick, by cutting the meat and subsequently spreading, and in particular, locally, separating the meat at the location of the cut such that thicker meat part is easier accessible and thus easier to cook (cooking is including all other temperature treatments and preparations like for instance baking, barbecuing, sous-vide heating, cooling, marinating, pickling and so on). This make the preparation of the poultry parts not only faster but also the risk of contamination due to insufficiently cooked poultry meat is minimised. A further important advantage is that the cut and separated poultry part is easier to consume as consumers may separate the meat easier from the bone during consumption or the bone may even be detached before the consumption of the meat. A consumer may decide to consume the poultry part, such as the drumstick, traditionally by hand, or may opt to use cutlery to consume said poultry part. The latter being a legitimate option due to the spread or separated meat, which allows for removal of the meat from the bone in the poultry part easier since it is accessible. Although the device according to the present invention may in particular be suitable for cutting along, and subsequently spreading of, the meat along the tibia or homerus of a piece of poultry, in particular a chicken, it may be conceivable that the same device is applied for different cuts of poultry. For example, the device may also be sued for cutting along a part of the femur bone. Although the present invention may primarily be suitable for butterflying a drumstick, it was surprisingly found that the device may be used for cutting and in particular butterflying a drumette.

With the present device the spreading section may spread the meat of the poultry parts in a direction perpendicular to the direction of transport of the poultry part, or in other wording, the meat is displaced by the spreading section in a direction perpendicular to the longitudinal direction of the incision made in the meat by the cutting section. The result of the spreading may also be that the meat is at least partially loosened. While the meat is displaced in at least a direction outwardly, or facing away from the incision, also the attachment of the meat onto the bone may be affected (more or less loosened dependent of the specific dimensions and circumstances). More or less loosening the meat form the bone is thus one of the further advantages of the use of the present invention. In order to spread the meat of the poultry part along the incision made, the spreading section may comprise a spreading element.

The meat spreading section may be configured for displacement of meat on the two opposing sides adjacent to said incision. As an alternative for only displacing the meat on one side of the incision, a more preferred, alternative is that the meat at both sides of the incision is pushed away from each other thus enhancing the effect sought for. The incision will thus likely open more which allows a better access to the interior of the meat that is cut and separated and also the attachment of the bone to the meat will be less firm as the incision is further opened. This may allow to butterfly the meat of the drumstick in an automated, mechanical manner. To butterfly the meat of the drumstick, the meat along at least a part of the tibia or homerus has to be detached, and preferably also one or more tendons are separated from the knee-side of the drumstick. This forms a piece of poultry, in particular a drumstick wherein the meat thereof can be positioned substantially flat.

The spreading section may comprise, and/or a spreading element may be at least partially formed by, a static spreader, which static spreader comprises at least one, preferably two, spreading surfaces, wherein at least one spreading surface is laterally outward diverging, in the direction of the transport path. Preferably the spreading section has two symmetrically laterally outward diverging spreading surfaces. A static spreading surface is simple to operate as it requires no driving, actuation, or intelligent control; just a correct stationary position makes that the movement of the conveyor, transporting the poultry parts, results in a contact of the cut open poultry part after which initial contact the further forward movement of the poultry parts makes that, due to shape of the laterally outward diverging stationary spreading surface, the meat is pushed away (spread open). For a correct positioning of the poultry parts during this operation (due to which spreading forces will be exerted onto the poultry parts) the poultry parts may be held in their orientation by (stationary) guides or tracks along which the poultry part moves during the spreading. It is imaginable that at least one outwardly diverging spreading surface is formed by at least one spreading track, preferably at least two spreading tracks, in particular wherein at least one spreading track diverges in a laterally outward direction with respect to the transport path. More particularly it may be preferred to have a symmetrical arrangement of spreading tracks, at least symmetrically arranged with respect to the transport path, more in particular a transport path defined by the incision made by the cutting element.

Preferably, at least an upstream side of the static spreader, in particular a diverging part thereof, is positioned, in particular aligned with, in the transport path and/or cutting element. The diverging part may be formed by the diverging spreading surfaces and/or or a spreading track. By positioning, and in particular by aligning an upstream side of the diverging part it may be achieved that the upstream end is aligned with an incision made in the poultry part, such that the transport of the poultry part along the diverging part enables the local separation or spreading of the meat with respect to the bone of the poultry part. An upstream end of the diverting part is to this end preferably relatively thin. This may allow the upstream end to easily enter the incision made by the cutting element. It is preferred that an upstream end of at least one spreading element is partially curved, in particular concavely curved, more in particular, wherein a curvature of the upstream side is substantially similar to a curvature of the cutting element, if the cutting element is substantially disc shaped.

The spreading section may optionally comprise at least one dynamic spreader that is moveable in a direction perpendicular to the transport path of the poultry parts, for dynamically spreading, preferably separating, the meat along the incision with respect to the bone of the poultry part. The direction perpendicular to the transport path in this instance may be substantially vertical, or upward or downward with respect to the transport path. However, it may also be conceivable that the dynamic spreader is movable at an angle relative to the transport path, as long as the dynamic spreader has moves towards the incision made in a poultry part. It may even be imaginably that the dynamic spreader moves in an upward and upstream direction. By providing a dynamic spreader it may be possible to achieve a more active spreading or separating action, which may contribute to a further and better separation of the meat. The dynamic spreader element may be at least movable between:
- an operational state, wherein at least a part of the dynamic spreader is positioned in, in particular at least partially intersecting, the transport path of the poultry parts, in particular for locally separating meat from a bone of the poultry part; and
- a non-operational state, wherein the dynamic spreader is positioned at a distance from the transport path of the poultry parts.

Preferably, the movement of the dynamic spreader is aligned with the movement of the poultry part. Moving the dynamic spreader upwardly, in particularly positioning it in the transport path allows for an improved separation of the meat from the bone. Preferably, the dynamic spreader is situated lower in the non-operational state. It may be imaginable that at least in the operational state, a part of the dynamic spreading element is positioned near and/or in contact with a part of the bone of the poultry part for locally separating meat from the bone. By positioning a part of the dynamic spreader against or close to the bone, the most efficient separation may be achieved in terms of effectively separating the meat partially from the bone of the poultry part.

Preferably, the movement of the dynamic spreader is mechanically controlled. A mechanical control, in particular a mechanical timing, is preferred since this may allow for a less complex construction of the device. Preferably, the dynamic spreader comprises a cam driven cam-follower, for controlling the movement of the dynamic spreader between the operational and non-operational state. The cam follower may be attached directly to the dynamic spreader, preferably at a side of the conveyor. The cam driven cam-follower may be driven by a cam, said cam may be part of and/or form a cam drive. The cam or cam drive may be part of and/or attached to, a part of the conveyor and/or poultry carrier. Preferably, the cam is attached and/or part of the device which moves along the spreader element. By making the cam or cam drive part of the conveyor and/or poultry-carrier it may be achieved that the cam-follower of the dynamic spreader is activated at the desired time. Since the dynamic spreader is preferably actuated at a particular moment in time, this may be achieved by attaching it to the conveyor, without the need for complex control systems to accurately time an actuation of the dynamic spreader. Preferably the cam or cam drive and cam follower together form a linear cam drive and cam follower mechanism.

The dynamic spreader comprises at least a base part, and at least two tearing fingers, wherein said fingers are mounted, preferably resiliently or movably mounted, to the base part. Preferably, wherein said tearing fingers intersect with the transport path when the dynamic spreader is in the operational position. Said fingers may allow to reach into the cavities of the poultry part easier, and hence may provide for an improved positioning relative to the bone in the poultry part in order to increase the separation efficiency. Obviously, it is desired to locally completely separate the meat from the bone, preferably without leaving pieces of meat locally attached to the bone. To this end, the fingers may provide for the needed accuracy. It may be conceivable that at least one tearing finger is resilient and/or movable in a lateral direction with respect to the transport path for placing of said tearing finger at a side of the bone of the piece of poultry part. The lateral direction may alternatively be referred to as a width direction or a sideward direction. It is conceivable that said tearing fingers are movable between an operational position, wherein at least a part of each finger is positioned on a side of the bone, preferably on opposing sides, more preferably in contact with the bone of a poultry part transported along the dynamic spreader. And a non-operational position, wherein the tearing fingers are not in contact with a poultry part. Preferably, the tearing fingers, at least in a non-operational position, are substantially parallelly arranged. In the operational position, said fingers may mutually enclose an angle. Preferably, said tearing fingers are pivotally attached to the base part, such as to pivot around a pivot axis. Said pivot axis preferably being parallel to the transport path, such that a movement in lateral direction may be achieved during a pivot movement of the tearing fingers. Preferably, during a movement between the operational and non-operational state, it may be possible that the dynamic spreader moves in both vertical and lateral direction, at least temporarily. In particular, it may be imaginable that, during an upward movement of the dynamic spreader, tibia bone, i.e., the tibia, of the poultry part forces the two tearing fingers in a lateral or sideward direction. The sideward movement of the tearing fingers may proceed until the dynamic spreader has reached the highest point. Hence, the lateral movement of the tearing fingers may be induced by means of a contact with the bone of the poultry part. Therefore, it may be preferred that the tearing fingers are resilient or resiliently mounted to the base part to ensure they return to their initial position in order to be able to tear the meat of a subsequent poultry part. Preferably, at least a part, in particular an upwardly facing side thereof, of said at least two tearing fingers are arranged at a mutual distance. Said opening may be dimensioned to receive a part of the bone, i.e., the tibia, of the poultry part when the dynamic spreader is moved in upward direction towards a cut piece of poultry. In particular, the upward facing ends of the tearing fingers are positioned at opposing sides of the transport path, in particular at opposing sides of a centerline of a bone or incision of a poultry part to be transported along the spreader section. This ensures correct alignment and accurate spreading of each poultry part. To allow for easy entry into the incision, it is conceivable that an upward facing edge of at least one tearing finger, preferably each tearing finger is at least partially tapered. A narrower top end of the tearing finger may allow for easier entry in the meat along the cut. Preferably, the dynamic spreader is configured for locally separating the meat from the part of poultry.

It was found that very good results were achieved with a spreading section comprising both a static spreader and a dynamic spreader, in particular wherein the dynamic spreader is arranged downstream the transport path with respect to the static spreader. Providing both a static spreader and a dynamic spreader, in particular when the dynamic spreader is arranged downstream of the static spreader provides a synergistic effect between said spreaders. This may allow the static spreader to provide an initial spreading action, at least partially opening the incision made by the cutting element, and wherein the dynamic spreader allows for actual local separation of the meat from the bone. Preferably, the dynamic spreader provides for a local separation of meat from the bone, whereas the static spreader provides at least for local opening of the incision. Preferably the dynamic spreader is configured for tearing, in particular due to the placement of the tearing fingers, at least one tendon, preferably in proximity of a knee side of the tibia. It is preferred that a downstream end of the static spreader is wider than a part, in particular an upstream part of the dynamic spreader. This may allow the dynamic spreader to accurately enter into the opening formed around the incision by the static spreader.

In order to increase the separation efficiency, the device may comprise at least one spreading section retainer, arranged on the opposite side of the transport path of the poultry parts than the spreading section, or facing towards the spreading section, for exerting a (counter)pressure to the poultry parts during the transportation of the poultry parts along the spreading section. This may prevent that the poultry part simply "bumps" over the spreading section without transferring an actual spreading movement onto the poultry part. In particular, the upward movement of the dynamic spreader may, without providing the spreading section retainer, be less effective. The retainer may thus define an upper extreme position of the poultry part that is transported along the spreading section. The retaining element may in particular limit or prevent a (further) upward movement of the poultry part during a spreading action of the spreading section. Preferably, said spreading section retaining element at least partially overlaps with the static spreader and/or dynamic spreader, in particular both. It may be preferred that said spreading section retainer at least partially overlaps with the static spreader and/or dynamic spreader, in particular both. Preferably, the spreading section retainer is at least partially resilient, at east an upstream part thereof. This may particularly beneficial since most of the drumsticks slightly differ in size, in order to account for size and shape differences of respective drumsticks, it may help to make an upstream end, i.e., a receiving end of the spreading section retainer (slightly) resilient.

The cutting element of the cutting section may include, in particular be formed by a rotatable cutting element. Said rotatable cutting element may form a cutting disk. Preferably, the cutting element is at least partially arranged in the transport path. In particular a side of the rotatable cutting element situated above the rotational axis is positioned in the transport path. The rotational axis may be substantially perpendicular to the transport path, in particular extending in a width direction. Preferably, the part of the cutting element arranged in the transport path moves in a direction opposite to the transport direction. However, it is also conceivable that the transport direction and cutting direction are oriented in the same direction. If a static spreader is provided, a highest point of the static spreader is preferably situated below the highest point of the rotatable cutting element. If a dynamic spreader is applied, a highest part of the dynamic spreader is preferably situated below a highest point of the rotatable cutting element, at least when the dynamic spreader is in the non-operational position. In the operational state, it is imaginable that a highest part of the dynamic spreader is situated above a highest point of the rotatable cutting element. If both a static and a dynamic spreader are applied, the dynamic spreader, at least a highest point is situated above the dynamic spreader when the dynamic spreader is in the operational state.

It is imaginable that the cutting section comprises at least one guide for guiding poultry parts, in particular for guiding the poultry parts along a cutting element of the cutting section. Said guiding element may be configured for guiding the poultry part, in particular the drumstick, along a part of the cutting section in a predefined orientation or position with respect to the cutting element. This may allow the cutting element to make an incision along a predefined part of the bone of the poultry part, in particular, the drumstick comprises two bones, the tibula and the fibula. The fibula extends along (or through) substantially the entire drumstick, whereas the fibula extends from the knee area of the poultry in a downward direction along only part of the fibula. It is conceivable that at least a part of the guide is configured for rotating and/or tilting a poultry part prior to and/or during entering of the cutting section. It may be preferred to cut along a part of the tibia bone, which is at a distance with respect to the fibula. Hence, the guide may be configured for guiding the poultry part, in particular the drumstick, in a predefined orientation or position through said cutting section, such that the cutting element is arranged for cutting along a length direction of the tibia, at a distance from the fibula. Where in this application cutting along a part of the bone is mentioned, it should be noted that it is not required, and maybe not even preferred, to cut into the bone. Preferably, the cutting element is configured for cutting through the meat in close proximity of the bone. Preferably, the spreader section tears the meat from the actual bone. Preferably at least a part, in particular an upstream part of the spreading element and/or of the spreading section is positioned in and/or overlaps with said guide channel. This may ensure that the poultry part is indeed guided along the spreading section, particularly still in the preferred orientation. This may prevent that the drumstick rotates or moves out of position upstream of the spreading section. This is beneficial since this ensures a good alignment of the (upstream end) of the spreading section with the incision made with the cutting element.

At least one guide may be partially shaped as a channel, comprising a channel bottom, along or over which channel bottom the poultry part may be dragged or carried or towed, and one or two upwardly extending channel walls, which may define the channel passage. Said channel walls may be arranged at a mutual distance. The channel walls may provide some lateral stability of the poultry part during transport through said channel, which may help to avoid rotation or displacement of the poultry part. Optionally, at least one channel bottom comprises at least one cutting slot, for accommodating a part of the cutting element. Preferably, said cutting element extends through said cutting slot such as to stretch into the channel formed by the channel bottom and channel walls. Preferably, the rotational axis, which may be horizontal of the cutting element is situated below a channel bottom.

It is also conceivable that the device according to the present invention comprises a pair of cutting sections, and a pair of spreading sections arranged parallelly at a distance from each other in the lateral direction, i.e., perpendicular to the transport path. This may provide for an increase of the processing capacity of the device according to the invention which is beneficial in output. Due to the parallel arrangement, it is possible to achieve a doubling in processing capacity with the same movement speed of the conveyor which may be very beneficial. Normally, doubling the processing capacity would require doubling e.g., the conveyor speed. However, this is very tricky as all the processing sections tend to be adjusted to a and/or designed for a predetermined speed of the conveyor. Hence, doubling the capacity would normally not be achievable by the same device. The present invention allows for a relatively easy way to achieve said doubling, even tripling or quadrupling may be achieved by arranging a larger number of cutting and spreading sections in the width direction. In case more than one cutting section are provided, it is imaginable that all cutting elements are driven individually, however the cutting elements may also be attached to a single drive axis, which axis is driven by a single drive motor. Similarly, it is imaginable that each of the sections comprises its own guide channel.

Optionally, the cutting section comprises at least one retainer, for providing of a predefined counterpressure to a part of poultry transported through the cutting section. This may allow to provide an accurate incision which is not to deep such that splints of the bone are spread into the meat, and not too shallow, such that the spreading section cannot spread the meat and/or separate the meat locally from the bone. Preferably the retainer is arranged on the opposite side of the transport path of the poultry parts than the cutting section and/or facing towards the cutting section, for exerting a pressure to the poultry parts during the transportation of the poultry parts along the cutting section. Said cutting section retainer may comprise a pivotable lever, preferably provided with a roller, positioned at a distance from the pivot point of said lever, in particular wherein said lever is mounted under pretension to said pivot point, preferably via a rotational spring, for providing a pretension in a rotation direction of said lever. This may account for all the dimensional variations of the poultry parts and may function effectively for larger and for smaller poultry parts, in particular drumsticks.

Device according to any of the preceding claims, comprising at least one, preferably a plurality of poultry-carriers for carrying of poultry parts. At least one poultry carrier may be attached to and/or forming part of the conveyor. are attached to the conveyor. Preferably at least a part of at least one poultry carrier is rotatable with respect to the conveyor, preferably about an axis of rotation which is perpendicular to the transport path. Said axis or rotation preferably extending in an upward direction. In case parallel cutting and spreading sections are applied, it is imaginable that at least one poultry-carrier is configured for carrying a pair or a plurality of poultry parts, preferably for carrying said poultry parts at a mutual distance with respect to each other. Said distance preferably being in conformity with a distance between the cutting sections and spreading sections. It is conceivable that at least a part of at least one poultry carrier is configured to be intermittently rotated by the device, in particular the conveyor and/or a frame of the device. It is imaginable that at least one, preferably each, poultry-carrier comprises an axially rotatable base structure mounted to said conveyor, in particular a belt, and at least one poultry carrying structure attached to and erected from said base structure, wherein the base structure acts as driven wheel, in particular a square drive wheel, and wherein the device, in particular the conveyor or a frame of the device, comprises at least one drive cam, such as a pin, preferably a stationary pin, configured to co-act with and consequently to rotate the driven wheel once the driven wheel passes said drive cam. This may provide for an easy and reliable rotation of the poultry-carrier of the device. Preferably the driven wheel comprises a plurality of *n* slots, wherein n is preferably 4, configured to successively engage with the drive cam to rotate the base structure over an angle of 360/n degrees, wherein the driven wheel is preferably a square drive wheel wherein each slot connects to a corner of said square driven wheel and extends towards the axis of rotation of said square driven wheel. The device may comprise at least one Maltese cross drive to intermittently rotate at least a part of the poultry carrier. Preferably, the device is configured for rotating the poultry carrier downstream of the splitting section. This may allow the device to automatically, in particular mechanically, rotate the poultry carrier after the processing of a poultry part is finished. For example, the poultry-carrier may be rotated such as to simplify the discharge of the poultry parts, or to allow an operator to access the processed poultry parts for removal thereof from the device. In case the conveyor is an endless conveyor, the poultry-carrier is preferably rotated also at a location upstream of the cutting section, in order to allow (re-)alignment of the poultry parts for the cutting section.

Preferably, the at least one conveyor is an endless conveyor, wherein said endless conveyor optionally comprises at least one endless belt. The endless conveyor may allow for a continuous process in a relatively compact space. Moreover, it may be applicable in a more modular manner compared to regular poultry processing devices which generally are provided within a single drive line which provide for less flexibility and higher risk when a part of the line fails. Also, the endless conveyor may allow for a more efficient way to increase capacity by using two of the devices (in addition to adding parallel lanes as described above). Said endless belt conveyor may comprise a primary run and a secondary run, wherein intermediate space is defined between the primary run and the secondary run, and wherein at least a part of said primary run defines the transport path. Preferably, the cutting section and the spreading section are arranged along the primary run of the endless conveyor. Said belt conveyor comprises at least one belt return device facilitating transitioning of the endless belt between the primary run and the secondary run. Said belt return device may comprise at least one guide sprocket, preferably at least one driven guide sprocket and optionally at least one non-driven guide sprocket. Preferably, the device comprises at least one poultry-carrier wherein at least one, preferably each poultry-carrier is configured to carry at least one poultry part at a distance from the belt. Preferably wherein at least one, preferably each, poultry carrier comprises a base structure mounted to said belt, and at least one poultry carrying structure attached to and erected from said base structure, wherein said poultry carrying structure is preferably configured to hang poultry onto said carrying structure such that the poultry is positioned at a distance from the base structure. Preferably, at least one poultry carrier, preferably each poultry carrier comprises at least one hook, suspended by a distance element, wherein said hook is configured for carrying at least a part of a poultry part. It is conceivable that the hook comprises an open end and a closed end. Preferably, said open end allows for insertion of a (narrower) area of the poultry part in particular for suspending a drumstick in a downward orientation, at least in a resting position of the poultry part, wherein the knee portion of the drumstick is situated lower compared to the ankle portion. Optionally, the poultry carrier comprises a pair of spaced apart hooks, for carrying a pair of poultry parts. Preferably, when the poultry carrier is positioned in proximity of the cutting section said closed part of the hook is situated upstream compared to the open end of the hook. This may prevent that, due to the (optional) rotation or tilting action of the (optional) guide, the poultry part falls out of the carrier, in particular out of the hook.

The present invention is further related to a method for cutting parts of poultry having at least one bone, in particular poultry leg parts, in particular drumsticks, preferably by using the device according to the present invention, comprising the steps of:
a) positioning or loading one or more poultry parts to be processed, in particular onto a poultry-carrier, directly or indirectly, onto a conveyor of a poultry processing device,
b) conveying the poultry parts by using the conveyor, such that said one or more pieces of meat are displaced in a transport direction,
c) making at least one incision, in particular during the conveying of step b), by using a cutting element of a poultry processing device, wherein said incision extends at least partially along the bone of the poultry part,
d) spreading, subsequent to step c), at least locally and mechanically, and at least partially folding the meat adjacent to the incision open.
e) unloading the poultry part subsequent to step d). It may be conceivable that step d) comprises:
   d1) statically spreading meat adjacent to the incision made during step c), in particular by using a static spreader, and
   d2) dynamically spreading the meat adjacent to the incision using a dynamic spreader, in particular separating the meat from the bone of the poultry part, and wherein during step d1) or d2) at least one tendon is detached from the bone of a poultry part. With respect to the method the same benefits as provided with respect to the device according to the invention apply similarly.

Preferred embodiments of the invention are illustrated by means of the non-limitative set of clauses presented below.

### Clauses

1. Device for processing poultry parts having at least one bone, preferably leg parts or drumsticks, comprising:
   - a conveyor, for transporting poultry parts, in particular drumsticks, along a transport path, including poultry-carriers for carrying poultry parts,
   - a cutting section arranged along the transport path of the conveyor, comprising at least one cutting element for making an incision in a part of the meat of poultry parts transported along the transport path, wherein said incision preferably extends along a part of a bone, such as the tibia, of the leg or drumstick,
   - a meat spreading section, arranged along the transport path of the conveyor downstream of the cutting section comprising at least one spreader, for spreading the meat adjacent to the incision.
2. Device according to clause 1, wherein the meat spreading section is configured for displacement of meat on the two opposing sides adjacent to said incision.
3. Device according to clause 1 or 2, wherein the spreading section comprises a static spreader, said static spreader comprising at least one, preferably two, spreading surfaces, wherein at least one spreading surface is laterally outward diverging, in the direction of the transport path.
4. Device according to clause 3, wherein at least one outwardly diverging spreading surface is formed by at least one spreading track, in particular wherein at least one spreading track diverges in a laterally outward direction with respect to the transport path.
5. Device according to clause 3 or 4, wherein at least an upstream side of the static spreader, in particular a diverging part thereof, is positioned, in particular aligned with, in the transport path.
6. Device according to any of the preceding clauses, wherein the spreading section comprises at least one dynamic spreader that is moveable in a direction perpendicular to the transport path of the poultry parts.
7. Device according to clause 6, wherein said dynamic spreader is at least movable between:
   - an operational state, wherein at least a part of the dynamic spreader is positioned in the transport path of the poultry parts, in particular for locally separating meat from a bone of the poultry part; and
   - a non-operational state, wherein the dynamic spreader is positioned at a distance from the transport path of the poultry parts.
8. Device according to clause 7, wherein, at least in the operational state, a part of the dynamic spreading element is positioned near or in contact with the bone of the poultry part for locally separating meat from the bone.
9. Device according to clause 7 or 8, wherein the dynamic spreader comprises a cam driven cam-follower, for controlling the movement of the dynamic spreader between the operational and non-operational state.
10. Device according to one of clauses 9, wherein a cam drive is part of and/or attached to, the conveyor and/or a poultry-carrier.
11. Device according to any of clauses 9-10, wherein the cam drive and cam follower form a linear cam drive and cam follower mechanism.
12. Device according to any of the clauses 6-11, wherein the dynamic spreader comprises at least a base part, and at least two tearing fingers, wherein said fingers are mounted, preferably resiliently or movably mounted, to the base part.
13. Device according to clause 12, wherein at least one tearing finger is resilient and/or movable in a lateral direction with respect to the transport path for placing of said tearing finger at a side of the bone of the poultry part.
14. Device according to clause 12 or 13, wherein said pair of fingers are arranged at opposing sides of the transport path.
15. Device according to any of the preceding clauses, wherein the spreading section comprises a static spreader and a dynamic spreader, wherein the dynamic spreader is arranged downstream the transport path with respect to the static spreader.
16. Device according to clause 15, wherein a downstream end of the static spreader is wider than a part of the dynamic spreader.
17. Device according to any of the preceding clauses, wherein the device further comprises at least one spreading section retainer, arranged on the opposite side of the transport path of the poultry parts with respect to the spreading section and/or facing the spreading section, for exerting a pressure to the poultry parts during the transportation of the poultry parts along the spreading section, preferably wherein said spreading section retainer is at least partially resilient.
18. Device according to clause 17, wherein said spreading section retainer at least partially overlaps with a static spreader and/or dynamic spreader.
19. Device according to any of the preceding clauses, wherein the cutting element of the cutting section includes, in particular formed by a rotatable cutting element.
20. Device according to any of the preceding clauses, wherein the cutting section comprises at least one guide for guiding poultry parts.
21. Device according to clause 20, wherein at least a part, in particular an upstream part of the spreading element, of the spreading section is positioned in and/or overlaps with a guide channel.
22. Device according to clause 19 or 20, wherein the guide is configured for positioning the poultry parts in a predetermined position.
23. Device according to any of the preceding clauses, wherein the cutting section comprises at least one retainer, for providing of a predefined counterpressure to a part of poultry transported through the cutting section.
24. Device according to any of the preceding clauses, wherein the device comprises a retainer, arranged on the opposite side of the transport path of the poultry parts than the cutting section, for exerting a pressure to the poultry parts during the transportation of the poultry parts along the cutting section.
25. Device according to clause 24, wherein the cutting section retainer comprises a pivotable lever, preferably provided with a roller, positioned at a distance from the pivot point of said lever, in particular wherein said lever is mounted under pretension to said pivot point, preferably via a rotational spring, for providing a pretension in a rotation direction of said lever.
26. Method for cutting parts of poultry having at least one bone, in particular poultry leg parts, in particular drumsticks, preferably by using the device according to any of the clauses 1-25, comprising the steps of:
   a) positioning or loading one or more poultry parts to be processed, in particular onto a poultry-carrier, directly or indirectly, onto a conveyor of a poultry processing device,
   b) conveying the poultry parts by using the conveyor, such that said one or more pieces of meat are displaced in a transport direction,
   c) making at least one incision, in particular during the conveying of step b), by using a cutting element of a poultry processing device, wherein said incision extends at least partially along the bone of the poultry part,
   d) spreading, subsequent to step c), at least locally and mechanically, and at least partially folding the meat adjacent to the incision open, and optionally
   e) unloading the poultry part subsequent to step d).
27. Method according to clause 26, wherein step d) comprises:
   d1) statically spreading meat adjacent to the incision made during step c), in particular by using a static spreader, and d2) dynamically spreading the meat adjacent to the incision using a dynamic spreader, in particular separating the meat from the bone of the poultry part, and wherein during step d1) or d2) at least one tendon is detached from the bone of a poultry part.

The present invention will hereinafter be further elucidated based on the following non-limitative figures, wherein:
- Figure 1 shows a schematic perspective view of the device;
- Figure 2 shows a front view, as seen in the transport direction, of the device,
- Figure 3 shows a cross-section along line C-C as shown in figure 2; and
- Figure 4 shows a perspective rear view, as seen in against the transport direction, of the device.

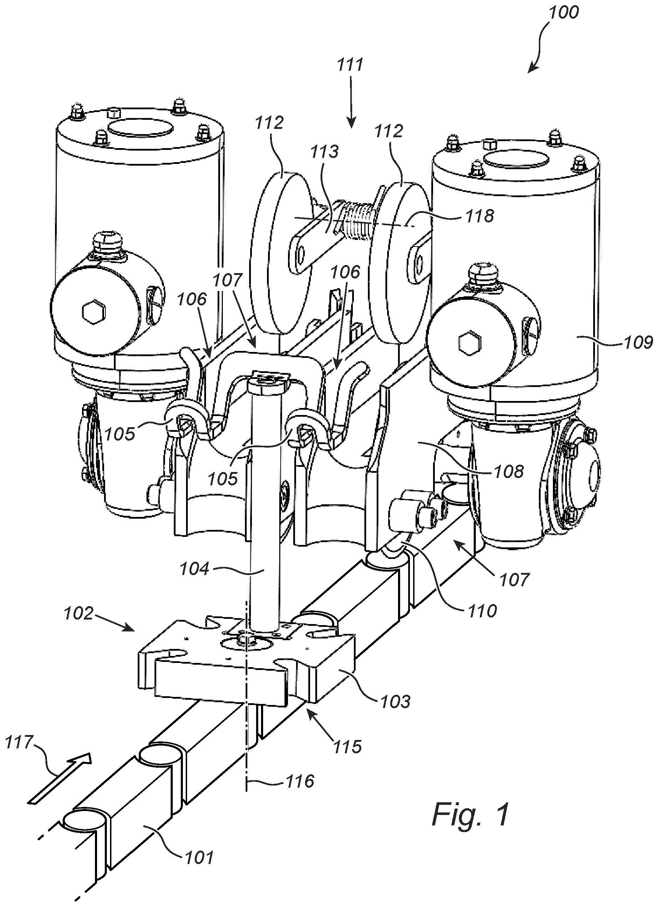

Figure 1 shows the device 100 for processing poultry parts according to the present invention. The device comprises a conveyor 101 which in this embodiment is formed by an endless conveyor 101 to which a plurality of poultry carriers 102 are attached. This figure depicts only a part of the endless conveyor 101 and a single poultry-carrier 102, which is for illustrative purposes and by no means limitative. The poultry carrier 102 comprises a base structure 103, the base structure 103 being rotatably mounted to the conveyor 101. The base structure is rotatable around a rotation axis 116 which extends perpendicular to the conveyor in a substantially vertical direction. This may allow to (re-)align the carrier 102 with the cutting section 107. To this end, the base structure 103 may form a drive wheel, which may be drive by means of a drive cam and a part of the drive wheel 103. In particular the driven wheel 103 comprises four slots 115, configured to co act with a pin which may be part of the conveyor 101 or the device 101, such as a frame thereof. The slots 115 connect to a corner of the drive wheel 103. The poultry carrier 102 may be transported in the transport direction 117, such as to feed poultry parts towards the cutting section 107. In order to carry the poultry parts the carrier 102 may comprise a carrying structure 104, which in this embodiment is formed by an erect frame or distance element 104 extending from the base structure 103 such as to carry poultry parts at a distance from the conveyor 101. The carrying structure 104 further comprises a hook 105, 106. The hook may comprise an open end 106 and a closed end 105. The open end 106 allowing for access of a part of the poultry part to be inserted. The closed end to prevent the poultry part from falling out of the carrier 103. As seen in this figure, where the carrier 103 is just upstream of the cutting section 107, the closed end 106 of the hook is situated upstream of the open end 106 of the hook, hence allowing to retain the poultry part. Preferably, when a poultry part is carried by the carrier 103, a part of the poultry part is situated above the hook 105, 106, and a part of the poultry part is situated below said hook 105, 106. In particular, the ankle portion of a drumstick may be situated above the hook 105, 106 whereas the meat portion is suspended from, or hanging downwardly, with respect to the hook 105, 106. The cutting section 170 in the embodiment shown here comprises a guide 108, for guiding of a poultry part through the cutting section 107, and a driven cutting element 110. The cutting element 110 is formed as a disk-shaped cutting element which is driven by a drive motor 109. To allow for proper positioning and proper cutting of the cutting section 107, the device comprises a retainer 111, which is formed by a retaining disk or roller 112, connected to a resilient pivotable lever 113. Said lever is resiliently pivotable around a pivot axis 118, such as to provide a downward pressure to a poultry part transported through the cutting section 107. The embodiment shown in this figure comprises two parallel lanes for processing of poultry parts. Hence, the poultry carrier 103 is configured to carry two poultry parts at a mutual distance from each other in the width direction. Also, two cutting sections 107 are provided parallel to each other. The distancing element 104 of the carrier 103 is configured to move between the guides 108 of the two cutting sections 107 such as to prevent a collision. Although this embodiment shows two parallel processing lanes, the number of processing lanes may be varied.

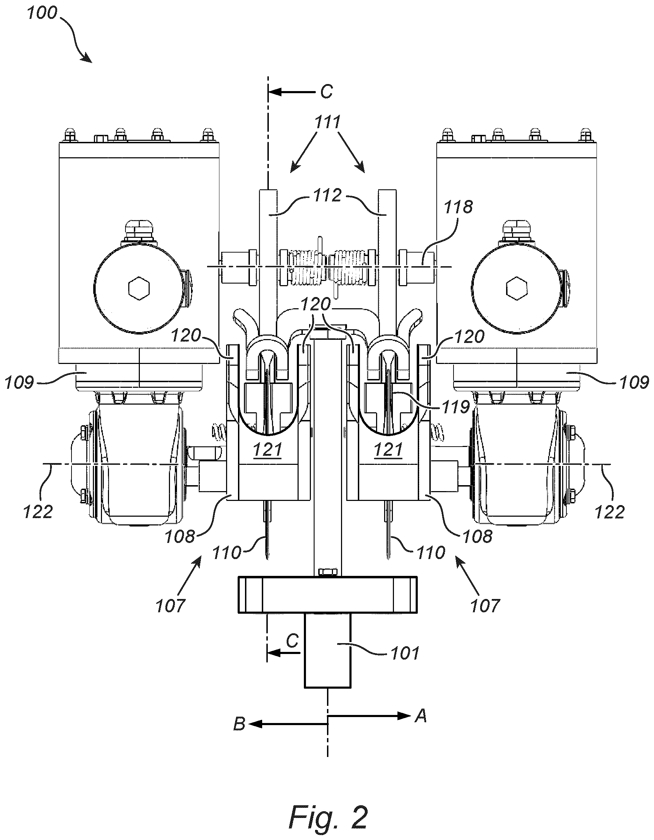

Figure 2 shows a front view, as seen in the transport direction, of the device 100 according to the present invention. This figure clearly depicts the two parallel lanes A, B, each for processing a poultry part carried by a carrier 103. The front view shows the guide(s) 108 are forming guide channels, said channels being formed by a channel base 121, and two upwardly extending channel walls 120. Said channel is dimensioned such that a poultry part, such as a drumstick can move through said channel 120, 121 tightly, preferably without preventing excess friction with the walls 120, however, said walls 120 may provide an inward correction movement to the poultry part such that the poultry part is guided along the cutting section 120 in a preferred manner. A part 119 of the cutting element **110** is positioned inside the channel, between the channel walls 120. To this end, the channel base (or channel bottom) 121 may be provided with a cutting slot, which allows the cutting element to extend through the channel bottom 121 into the channel. Preferably, the rotational axis 122, which may be horizontal of the cutting element is situated below a channel bottom 121. The part 119 of the cutting element 110 in the channel preferably moves in a direction opposite to the transport direction.

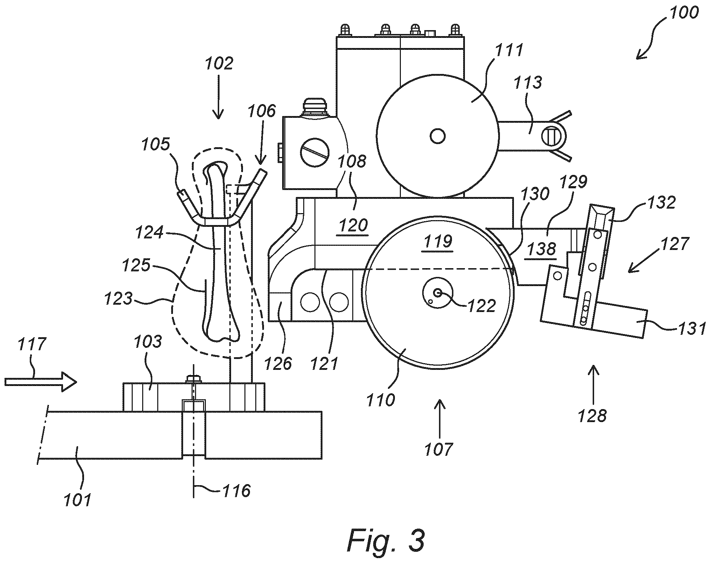

Figure 3 shows a cross-section of the device 100 as indicated by line C-C in figure 2. The transport direction 117 of the device is depicted. For illustrative purposes, a poultry part 123, in particular a drumstick 123 is indicated in this figure. The drumstick 123 comprises a tibia 124 and a fibula 125. It is noted that the drumstick 123 is oriented such that, as seen in transport direction 117, the tibia 124 is located upstream of the fibula 125. By providing the drumstick 123 in this orientation, it may be provided for that the cutting element 110, in particular a cutting part 119 thereof makes an incision along the tibia 124 of the drumstick, at a distance from the fibula 125. Since the fibula 125 is only attached at one end, it may otherwise involve the risk of bone splints to end up in the processed part. As is indicted, the ankle of the drumstick 123 is situated above the hook 125, 125 of the poultry carrier 102, whereas the meat portion of the drumstick 123 is downwardly suspended or hanging. When moving the drumstick 123 upstream in the transport direction 117, a lower portion of the drumstick 123 will make contact with a part 126 of the guide 108. Said part 126 is situated in the transport path of the poultry part 123, and situated lower, at least compared to the channel bottom 121 and may be partially curved, or slanted, and causes, upon making contact with the drumstick 123 to rotate the drumstick 123 in a more horizontal orientation. This allows the drumstick 123 to move substantially horizontally through the cutting section 107 and part of the spreading section 128. This provides the major advantage that an incision made by the cutting element 110, in particular the cutting part 119 thereof, is accessible more easily for the spreading section 128. The upstream end 126 of the guide 108 which provides the rotation and/or tilting of the drumstick 123 transitions into the channel bottom 121. Once the cutting part 119 of the cutting element 110 has made an incision along the tibia 124 of the drumstick 123, the drumstick is transported to the spreading section 128. Said spreading section 128 comprising, at least in the embodiment shown in this figure, a static spreader 129 and a dynamic spreader 127. Providing both static spreader 129 and dynamic spreader 128 provides a synergistic effect, in that the meat of the poultry part 123 is spread and locally separated very effectively such as to form a so-called butterflied drumstick 123. In particular, the static spreader 129 is positioned just downstream of the cutting element 110. The static spreader comprises outwardly diverging spreading surfaces 138. In particular, the upstream end 130 of the static spreader 129 is substantially concavely shaped, such as to follow the angular shape of the cutting element 110. Hence, the static spreader 129 is positioned directly adjacent to the cutting element 110, which contributes to the effectiveness thereof and to directly co-act with an incision made by the cutting element 110. Provided in a position downstream of the static spreader 129 is a dynamic spreader 127, which causes the meat adjacent to the incision, as pre-spread by the static spreader 129, to be locally separated. Particularly, to detach a tendon from the knee of the drumstick. To this end, the dynamic spreader 127 comprises a base structure or base part 131 and a pair of tearing fingers 132. The dynamic spreader is movable between an operational position, and a non-operational position. The figure shown here depicts the dynamic spreader 127 in the operational position. In this position, the tearing finger 132 is situated above the highest point of the static spreader 129 and above a highest point of the cutting element 110.

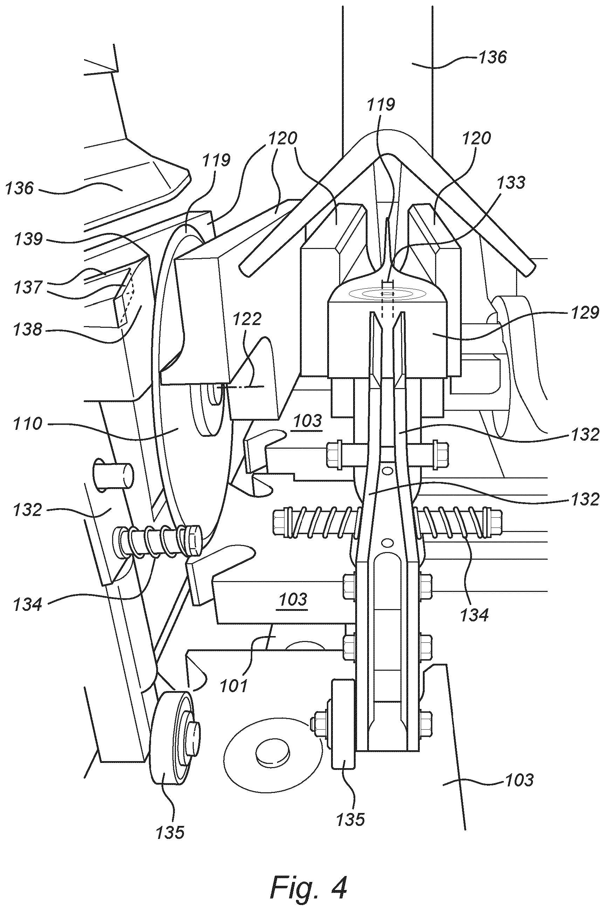

Figure 4 shows a perspective rear view, as seen in against the transport direction, of the device. The figure shows a clear visualization of the spreading section of the present invention. Seen more distant in the rear are the channel walls 120 and the cutting part 119 of the cutting element 110, some of the base structures 103 of the carriers mounted and part of the conveyor 101. The figures show the static spreader 129 and the dynamic spreader which is oriented downstream of the static spreader 129. In this figure, the dynamic spreader is in the non-operational state. In this state, the dynamic spreader does not intersect the transport part. In particular, the tearing fingers 132 are situated substantially entirely below the static spreader 129. The dynamic spreader may move upwardly, such as to intersect the transport path, via a cam follower 135, which can be activated by a cam drive. Upon moving upwardly, the tearing fingers 132 intersect the transport path, and in particular enter the pre-spread meat in the incision made by the cutting element 110. An upper end of the tearing fingers 132 is situated at a mutual distance 133. This distance has proven particularly relevant to ensure good tearing results. Due to the distance, said tearing fingers 132 abut against the tibia, and move outwardly such as to be placed on both sides of the tibia. The tearing fingers 132 are resiliently mounted 134 by means of a spring loaded mount 134. This allows the tearing fingers 132 to move to the position indicated in this figure automatically as soon as they are retrieved out of the incision. The tearing fingers 132 are thus pivotable, in particular resiliently pivotable. Said pivoting action is in particular caused by the tearing fingers 132 making contact with the bone (tibia) of the poultry part and being forced outwardly due to a further upward movement of the dynamic spreader. This may allow that the tearing fingers 132 tear loose tendons of the poultry part such as to further spread the meat along the incision. The synergistic effect is caused by the static spreader 129 providing some degree of opening of the incision, which allows the tearing fingers 132 of the dynamic spreader to easily enter the incision and to access the bone of the poultry part. This figure further depicts some details of the static spreader 129. In particular, the figure indicates the outwardly diverging spreading surface 138, said surface 138 spreading outwardly in the lateral direction such that a downstream end of the static spreader 129 is wider than an upstream end 139. The upstream end 139 preferably is not much wider than the cutting element, for allowing the upstream end 139 to be easily accommodated partially in the incision made by the cutting element 110. The outward spreading surfaces 138 diverge outwardly symmetrically, providing a simple spreading operation without the need for complex or intelligent control. The outwardly spreading surfaces 138 may be formed and/or the static spreader 129 may comprise outwardly diverging spreading tracks 137, preferably at least two spreading tracks 137, in particular wherein at least one spreading track 137 diverges in a laterally outward direction with respect to the transport path. In order to prevent that the upward movement of the dynamic spreader simply lifts the poultry part, without actually spreading or tearing the meat along the incision, a spreading section retainer 136, which may also be referred to as retainer or retaining element, is provided. Hence, in order to increase the separation efficiency, at least one spreading section retainer 136 may be arranged on the opposite side of the transport path of the poultry parts than the spreading section, or facing towards the spreading section, for exerting a (counter)pressure to the poultry parts during the transportation of the poultry parts along the spreading section. The retainer 136 may thus define an upper extreme position of the poultry part that is transported along the spreading section. The retaining element 136 may in particular limit, or prevent a (further) upward movement of the poultry part during a spreading action of the spreading section.

The above-described inventive concepts are illustrated by several illustrative embodiments. It is conceivable that individual inventive concepts, including inventive details, may be applied without, in so doing, also applying other details of the described example. It is not necessary to elaborate on examples of all conceivable combinations of the above-described inventive concepts, as a person skilled in the art will understand numerous inventive concepts can be (re)combined in order to arrive at a specific application and/or alternative embodiment.

The ordinal numbers used in this document, like "first", "second", and "third" are used only for identification purposes. Hence, the use of expressions like a "second" component, does therefore not necessarily require the co-presence of a "first" component. By "complementary" or "co-acting" components is meant that these components are configured to co-act with each other. However, to this end, these components do not necessarily have to have complementary forms. The verb "comprise" and conjugations thereof used in this patent publication are understood to mean not only "comprise", but are also understood to mean the phrases "contain", "substantially consist of", "formed by" and conjugations thereof.

## Claims

1. Device for processing poultry parts having at least one bone, preferably leg parts or drumsticks, comprising:
- a conveyor, for transporting poultry parts, in particular drumsticks, along a transport path, including poultry-carriers for carrying poultry parts,
- a cutting section arranged along the transport path of the conveyor, comprising at least one cutting element for making an incision in a part of the meat of poultry parts transported along the transport path, wherein said incision preferably extends along a part of a bone, such as the tibia, of the leg or drumstick,
- a meat spreading section, arranged along the transport path of the conveyor downstream of the cutting section comprising at least one spreader, for spreading the meat adjacent to the incision.

2. Device according to claim 1, wherein the meat spreading section is configured for displacement of meat on the two opposing sides adjacent to said incision.

3. Device according to claim 1 or 2, wherein the spreading section comprises a static spreader, said static spreader comprising at least one, preferably two, spreading surfaces, wherein at least one spreading surface is laterally outward diverging, in the direction of the transport path.

4. Device according to claim 3, wherein at least one outwardly diverging spreading surface is formed by at least one spreading track, in particular wherein at least one spreading track diverges in a laterally outward direction with respect to the transport path.

5. Device according to any of the preceding claims, wherein the spreading section comprises at least one dynamic spreader that is moveable in a direction perpendicular to the transport path of the poultry parts.

6. Device according to claim 5, wherein said dynamic spreader is at least movable between:
- an operational state, wherein at least a part of the dynamic spreader is positioned in the transport path of the poultry parts, in particular for locally separating meat from a bone of the poultry part; and
- a non-operational state, wherein the dynamic spreader is positioned at a distance from the transport path of the poultry parts.

7. Device according to claim 6, wherein, at least in the operational state, a part of the dynamic spreading element is positioned near or in contact with the bone of the poultry part for locally separating meat from the bone.

8. Device according to claim 6 or 7, wherein the dynamic spreader comprises a cam driven cam-follower, for controlling the movement of the dynamic spreader between the operational and non-operational state.

9. Device according to one of claims 8, wherein a cam drive is part of and/or attached to, the conveyor and/or a poultry-carrier.

10. Device according to any of claims 8-9, wherein the cam drive and cam follower form a linear cam drive and cam follower mechanism.

11. Device according to any of the claims 5-10, wherein the dynamic spreader comprises at least a base part, and at least two tearing fingers, wherein said fingers are mounted, preferably resiliently or movably mounted, to the base part.

12. Device according to claim 11, wherein at least one tearing finger is resilient and/or movable in a lateral direction with respect to the transport path for placing of said tearing finger at a side of the bone of the poultry part.

13. Device according to claim 11 or 12, wherein said pair of fingers are arranged at opposing sides of the transport path.

14. Method for cutting parts of poultry having at least one bone, in particular poultry leg parts, in particular drumsticks, preferably by using the device according to any of the claims 1-13, comprising the steps of:
a) positioning or loading one or more poultry parts to be processed, in particular onto a poultry-carrier, directly or indirectly, onto a conveyor of a poultry processing device,
b) conveying the poultry parts by using the conveyor, such that said one or more pieces of meat are displaced in a transport direction,
c) making at least one incision, in particular during the conveying of step b), by using a cutting element of a poultry processing device, wherein said incision extends at least partially along the bone of the poultry part,
d) spreading, subsequent to step c), at least locally and mechanically, and at least partially folding the meat adjacent to the incision open, and optionally
e) unloading the poultry part subsequent to step d).

15. Method according to claim 14, wherein step d) comprises:
d1) statically spreading meat adjacent to the incision made during step c), in particular by using a static spreader, and
d2) dynamically spreading the meat adjacent to the incision using a dynamic spreader, in particular separating the meat from the bone of the poultry part, and wherein during step d1) or d2) at least one tendon is detached from the bone of a poultry part.
